(19)

**Europäisches Patentamt**
**European Patent Office**
**Office européen des brevets**

(11) **EP 4 550 220 A1**

(12) **EUROPEAN PATENT APPLICATION**

(43) Date of publication:
**07.05.2025 Bulletin 2025/19**

(21) Application number: **24209135.3**

(22) Date of filing: **28.10.2024**

(51) International Patent Classification (IPC):
*G06N 10/20* (2022.01)    *G06N 10/80* (2022.01)

(52) Cooperative Patent Classification (CPC):
**G06N 10/20; G06N 10/80**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(30) Priority: **01.11.2023 KR 20230149049
30.09.2024 KR 20240133159**

(71) Applicant: **Electronics and Telecommunications
Research Institute
Daejeon 34129 (KR)**

(72) Inventors:
• **JIN, Ki-Sung
34129 Daejeon (KR)**

• **CHA, Gyu-Il
34129 Daejeon (KR)**
• **KIM, Young-Chul
34129 Daejeon (KR)**
• **KIM, Chei-Yol
34129 Daejeon (KR)**
• **OH, Soo-Cheol
34129 Daejeon (KR)**
• **ON, Jin-Ho
34129 Daejeon (KR)**
• **LEE, Sang-Min
34129 Daejeon (KR)**
• **CHO, Eun-Young
34129 Daejeon (KR)**

(74) Representative: **Betten & Resch
Patent- und Rechtsanwälte PartGmbB
Maximiliansplatz 14
80333 München (DE)**

(54) **QUANTUM SIMULATION ACCELERATION APPARATUS AND METHOD**

(57)    Disclosed herein are a quantum simulation acceleration apparatus and method. The quantum simulation acceleration apparatus may configure a one-dimensional (1D) column vector [$\alpha$, $\beta$] from a quantum state of an input qubit, execute a quantum gate operation on the 1D column vector using at least one of a quantum gate having a diagonal component or a quantum gate having a non-diagonal component, or a combination thereof, and trace the quantum state of the qubit changing depending on the quantum gate operation.

**FIG. 3**

EP 4 550 220 A1

**Description**

CROSS REFERENCE TO RELATED APPLICATIONS

This application claims the benefit of Korean Patent Application Nos. 10-2023-0149049, filed November 1, 2023 and 10-2024-0133159, filed September 30, 2024, which are hereby incorporated by reference in their entireties into this application.

BACKGROUND OF THE INVENTION

1. Technical Field

The present disclosure relates generally to quantum computing technology, and more particularly to quantum simulation acceleration technology.

2. Description of the Related Art

A quantum computer is a futuristic supercomputer based on quantum mechanics such as entanglement and superposition. As it is predicted that a quantum computer will be commercialized in the near future, quantum computer technology attracts attention as future technology that will solve challenges humanity has not yet been able to overcome, such as the development of new materials, new drugs, and aerospace advancements. IBM became the first company to introduce quantum computing into the public cloud so that users are capable of remotely accessing quantum computers, and Google announced to the scientific community that it had achieved quantum supremacy using a 54-qubit quantum processor called Sycamore in 2018. This trend has raised expectations for innovation in various fields, including quantum chemistry, cosmology, medicine, and energy physics, which have been difficult to handle with classical computers. However, because the physical realization of a reliable quantum computer is still in its early stage, a significant amount of research in this area still relies on quantum simulations using classical computers.

The most representative one of classical quantum simulator approaches is a state vector simulator and is configured to store all quantum states in computer memory in the form of a vector array and to simulate quantum state changes with the execution of sequential quantum gates. This involves preparing the entire state array of N qubits, represented by two unit vectors, at the initial startup of the simulator, and storing the results of matrix multiplication corresponding to an input quantum gate in each state vector array. However, this approach has a limitation in that it requires exponentially increasing memory as the number of qubits increases. Basically, each quantum state has an amplitude represented by a 16-byte complex number, and thus the amount of memory required for a quantum circuit having N qubits may be $2^{N+4}$ bytes. For example, minimum memory requirement to run a 60-qubit quantum algorithm reaches 16 ExaBytes (EB), which is a scale that cannot be simulated even by the latest modern supercomputers. With current technology, quantum simulations using classical computing enables only execution of a 30-qubit circuit on desktops, a 35-qubit circuit on advanced servers, and a 50-qubit circuit on supercomputers.

Meanwhile, Korean Patent Application Publication No. 10-2023-0094098 entitled "Quantum Simulation Apparatus and Method" discloses a method for representing more qubit states in a smaller memory space by managing only quantum states having physical reality in a reduced quantum state space when simulating the quantum states of qubits using a digital computer.

SUMMARY OF THE INVENTION

Accordingly, the present disclosure has been made keeping in mind the above problems occurring in the prior art, and an object of the present disclosure is to achieve efficient quantum simulations in a reduced Hilbert space targeting quantum states having physical reality.

Another object of the present disclosure is to enable fast quantum simulations with lower computational costs compared to existing methods in consideration of the fact that quantum computational characteristics of quantum gates are different from each other.

A further object of the present disclosure is to utilize quantum simulations in fields such as quantum security, materials science, chemistry, and pharmacology, such as by precisely simulating complex molecular structures and reactions in drug development, by analyzing the properties of materials at the atomic level in materials science, and by utilizing quantum simulations for complex economic system modeling, risk management, the development of advanced investment strategies, etc. in finance.

In accordance with an aspect of the present disclosure to accomplish the above objects, there is provided a quantum simulation acceleration apparatus, including one or more processors, and a memory configured to store at least one program that is executed by the one or more processors, wherein the at least one program is configured to configure a one-dimensional (1D) column vector [$\alpha$, $\beta$] from a quantum state of an input qubit, execute a quantum gate operation on the 1D column vector using at least one of a quantum gate having a diagonal component or a quantum gate having a non-diagonal component, or a combination thereof, and trace the quantum state of the qubit changing depending on the quantum gate operation.

Here, the quantum state of the qubit may be defined as three quantum states for each qubit depending on a qubit pattern.

Here, the quantum state of the qubit may be defined as three quantum states including S_ZERO for a $\alpha$|0> state, S_ONE for a $\beta$|1> state, and S_SUPERPOSED for a $\alpha$|0>+ $\beta$|1> state when the qubit is in a superposition.

Here, the at least one program may be configured to execute a quantum gate operation that changes only a value of $\beta$ without changing a value of $\alpha$ in the 1D column vector [$\alpha$, $\beta$] using a quantum gate, in which a value of a component in a first column and a first row, among components of a matrix, is 1, among quantum gates having the diagonal component.

Here, the at least one program may be configured to execute the quantum gate operation only on a diagonal component using a quantum gate, in which the value of the component in the first column and the first row and a value of a component in a second column and a second row, among the components of the matrix, satisfy an Euler equation, among quantum gates having the diagonal component.

Here, the at least one program may be configured to execute the quantum gate operation as a multiplication operation between the 1D column vector and a value of a component corresponding to a first column, among components of a matrix of the quantum gate having the non-diagonal component, when the quantum state of the qubit is S ZERO.

Here, the at least one program may be configured to execute the quantum gate operation as a multiplication operation between the 1D column vector and a value of a component corresponding to a second column, among components of a matrix of the quantum gate having the non-diagonal component, when the quantum state of the qubit is S_ONE.

Here, the at least one program may be configured to execute a full matrix operation between the 1D column vector and a matrix of the quantum gate having the non-diagonal component and to update the quantum state of the qubit only in a case where both a value of the 1D column vector and a result of executing the full matrix operation are greater than 0 when the quantum state of the qubit is S_SUPERPOSED.

Here, the at least one program may be configured to update the quantum state of the qubit stored in the memory based on a quantum state changing in each quantum gate operation.

Here, the at least one program may be configured to, when the quantum gate operation is executed using the quantum gate having the diagonal component, directly update the quantum state of the qubit, changed with a result of the quantum gate operation, in the memory.

Here, the at least one program may be configured to, when the quantum gate operation is executed using the quantum gate having the non-diagonal component, temporarily store the quantum state of the qubit, changed with a result of the quantum gate operation, in a temporary storage, and bulk update temporarily stored quantum states in the memory after quantum gate operations on all qubits are terminated.

In accordance with another aspect of the present disclosure to accomplish the above objects, there is provided a quantum simulation acceleration method performed by a quantum simulation acceleration apparatus, including configuring a one-dimensional (1D) column vector [$\alpha$, $\beta$] from a quantum state of a qubit read from memory, executing a quantum gate operation on the 1D column vector using at least one of a quantum gate having a diagonal component or a quantum gate having a non-diagonal component, or a combination thereof, and tracing the quantum state of the qubit changing depending on the quantum gate operation.

Here, the quantum state of the qubit may be defined as three quantum states for each qubit depending on a qubit pattern.

Here, the quantum state of the qubit is defined as three quantum states including S_ZERO for a $\alpha$|0> state, S_ONE for a $\beta$|1> state, and S_SUPERPOSED for a $\alpha$|0>+ $\beta$|1> state when the qubit is in a superposition.

Here, executing the quantum gate operation may include executing a quantum gate operation that changes only a value of $\beta$ without changing a value of $\alpha$ in the 1D column vector [$\alpha$, $\beta$] using a quantum gate, in which a value of a component in a first column and a first row, among components of a matrix, is 1, among quantum gates having the diagonal component.

Here, executing the quantum gate may further include executing the quantum gate operation only on a diagonal component using a quantum gate, in which the value of the component in the first column and the first row and a value of a component in a second column and a second row, among the components of the matrix, satisfy an Euler equation, among quantum gates having the diagonal component.

Here, executing the quantum gate may further include executing the quantum gate operation as a multiplication operation between the 1D column vector and a value of a component corresponding to a first column, among components of a matrix of the quantum gate having the non-diagonal component, when the quantum state of the qubit is S ZERO.

Here, executing the quantum gate may further include executing the quantum gate operation as a multiplication operation between the 1D column vector and a value of a component corresponding to a second column, among components of a matrix of the quantum gate having the non-diagonal component, when the quantum state of the qubit is S_ONE.

Here, executing the quantum gate may further include executing a full matrix operation between the 1D column vector and a matrix of the quantum gate having the non-diagonal component and to update the quantum state of the qubit only in a case where both a value of the 1D column vector and a result of executing the full matrix operation are greater than 0 when the quantum state of the qubit is S_SUPERPOSED.

Here, tracing the quantum state of the qubit may include updating the quantum state of the qubit stored in the memory based on a quantum state changing in each quantum gate operation.

BRIEF DESCRIPTION OF THE DRAWINGS

The above and other objects, features and advantages of the present disclosure will be more clearly understood from the following detailed description taken in conjunction with the accompanying drawings, in which:

FIG. 1 is a diagram illustrating a quantum simulator using a reduced Hilbert space according to an embodiment of the present disclosure;

FIG. 2 is a diagram illustrating a quantum state evolution process for an input quantum gate when an arbitrary quantum gate is given as input in a quantum simulator using a reduced Hilbert space according to an embodiment of the present disclosure;

FIG. 3 is a block diagram illustrating a quantum simulation acceleration apparatus according to an embodiment of the present disclosure;

FIG. 4 is a diagram illustrating a qubit state transition process in a reduced Hilbert space according to an embodiment of the present disclosure;

FIG. 5 is an operation flowchart illustrating a quantum simulation acceleration method according to an embodiment of the present disclosure;

FIG. 6 is a diagram illustrating the quantum matrix operation characteristics of diagonal gates according to an embodiment of the present disclosure;

FIG. 7 is a diagram illustrating the result of comparing the effects of calculation processes on diagonal gates according to an embodiment of the present disclosure;

FIG. 8 is a diagram illustrating the pseudocode of a diagonal gate processing algorithm according to an embodiment of the present disclosure;

FIG. 9 is a diagram illustrating the pseudocode of a non-diagonal gate processing algorithm according to an embodiment of the present disclosure; and

FIG. 10 is a diagram illustrating a computer system according to an embodiment of the present disclosure.

DESCRIPTION OF THE PREFERRED EMBODIMENTS

The present disclosure will be described in detail below with reference to the accompanying drawings. Repeated descriptions and descriptions of known functions and configurations which have been deemed to make the gist of the present disclosure unnecessarily obscure will be omitted below. The embodiments of the present disclosure are intended to fully describe the present disclosure to a person having ordinary knowledge in the art to which the present disclosure pertains. Accordingly, the shapes, sizes, etc. of components in the drawings may be exaggerated to make the description clearer.

In the specification, when an element is referred to as "comprising" or "including" an element, it does not preclude another element but may further include other elements unless the context clearly indicates otherwise.

The present disclosure may be variously modified and may have various embodiments, and the embodiments are intended to be illustrated and described in detail in the accompanying drawings.

However, this is not intended to limit the present disclosure to particular modes of practice, and it is to be appreciated that all changes, equivalents, or substitutes that do not depart from the spirit and technical scope of the present disclosure are encompassed in the present disclosure.

In description of elements of the embodiment of the present disclosure, terms such as first, second, A, B, (a), and (b) may be used. These terms are used merely to distinguish one element from other elements, and the essentials, orders, or sequences of the elements are not limited by the terms.

Unless otherwise defined, all terms including technical and scientific terms used herein have the same meaning as commonly understood by one of ordinary skill in the art to which the present disclosure belongs. It will be further understood that terms used herein should be construed as having a meaning that is consistent with their meaning in the context of this specification and the relevant art and will not be interpreted in an idealized or overly formal sense unless expressly so defined herein.

It will be understood that when an element is referred to as being "associated" with another element, it can be directly associated with or connected to the other element or intervening elements may be present therebetween.

The terminology used herein is intended to merely describe specific embodiments only and is not intended to limit the present disclosure. A singular expression includes a plural expression unless a description to the contrary is specifically pointed out in context. It will be further understood that the terms "comprise", "include", "have", etc. when used in this specification, specify the presence of stated features, numbers, steps, operations, elements, or combinations thereof but do not preclude the possibility of the presence or addition of one or more other features, numbers, steps, operations, elements, or combinations thereof.

Hereinafter, embodiments of the present invention will be described in detail with reference to the attached drawings. In description of the present disclosure, independent reference numerals are used to designate the same elements in the drawings to facilitate overall understanding.

Hereinafter, a quantum simulator in embodiments of the present disclosure refers to a classical quantum simulator using a computer rather than designating an actual physical quantum computer.

Hereinafter, techniques to which the present disclosure is applied are not limited to be performed in a specific hardware environment. The present disclosure may be configured using a general-purpose computer or a storage device.

Hereinafter, a quantum simulation acceleration apparatus and method according to embodiments of the present disclosure are devised to operate based on a previously filed quantum simulation apparatus and method (Korean Patent Application Publication No. 10-2023-0094098, and U.S. Patent Application Publication No. US2023-0196157). According to the above-filed patents, there can be provided a method for representing more qubits in a smaller memory space by managing only quantum states having physical reality in a reduced quantum state space when simulating the quantum states of qubits using a digital computer. That is, conventional digital quantum simulation apparatuses always require huge memory having a capacity of $2^{N+4}$ bytes when N qubits are given, whereas the previously filed patents enable quantum simulation using more qubits in a smaller memory space in the same computing environment.

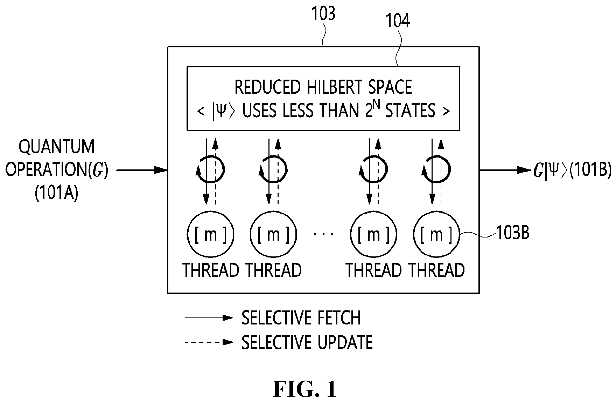

FIG. 1 is a diagram illustrating a quantum simulator using a reduced Hilbert space according to an embodiment of the present disclosure.

Referring to FIG. 1, a quantum simulator 103 using a reduced Hilbert space according to an embodiment of the present disclosure may receive each input quantum state 101A and output an evolved quantum state 101B with the execution of quantum gates. Here, a conventional full state vector-based quantum simulator and the quantum simulator 103 using the reduced Hilbert space may output the quantum states 101B that are quantumly identical as the results of execution when the same input quantum state 101A is received.

Here, the quantum simulator 103 using the reduced Hilbert space may dynamically manage a number of state vectors smaller than $2^N$ depending on whether an amplitude value is present in a reduced Hilbert space 104, instead of unconditionally storing $2^N$ state vector arrays in memory. In this way, the reason for selectively managing only state vectors having an amplitude value greater than 0 is that the amplitude value of 0 not only makes the result of a mathematical calculation be 0 but also means a physically meaningless quantum state.

In detail, the quantum simulator 103 using the reduced Hilbert space has the characteristic of extending or reducing the number of states with application of quantum gates after starting with one vector array during first initialization of the simulator. That is, the quantum simulator 103 using the reduced Hilbert space includes a number of state vectors ranging from a minimum of one state vector to a maximum of $2^N$ state vectors as state vectors to be managed in the memory, and most quantum algorithms require state vectors between two limits. Meanwhile, because the quantum simulator 103 using the reduced Hilbert space cannot equally distribute the state vectors to execution threads 103B, it has the characteristic of dynamically allocating state vector groups by means of the concept of a quantum state index.

Hereinafter, the quantum state index described in the present disclosure refers to position information of the corresponding state vector within a range of the entire size of a full quantum state space, that is, a range from 0 to $2^{N-1}$. For example, in quantum memory composed of three qubits, |000> denotes index #0, and |111> denotes index #7.

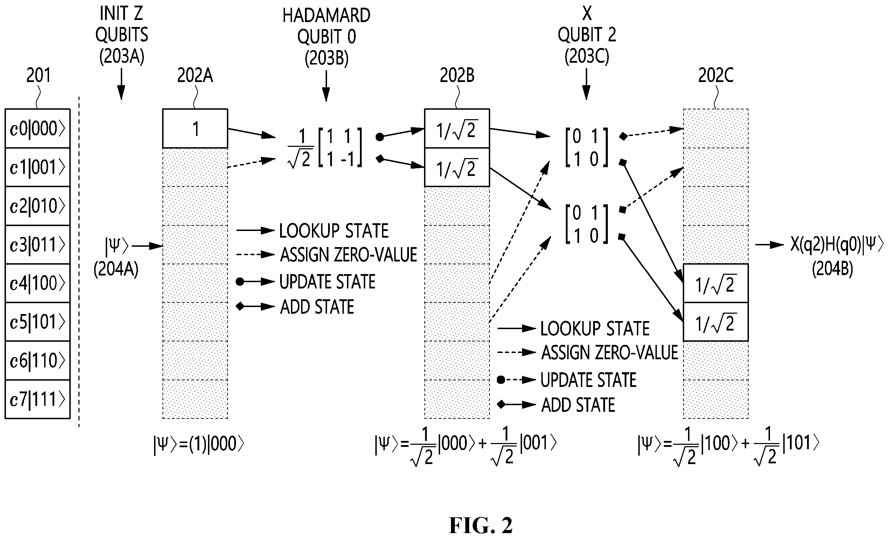

FIG. 2 is a diagram illustrating a quantum state evolution process for an input quantum gate when an arbitrary quantum gate is given as input in a quantum simulator using a reduced Hilbert space according to an embodiment of the present disclosure.

Referring to FIG. 2, for simplification of exemplification, the quantum simulator is assumed to process three qubit operations.

An example of a quantum space 201 for representing three qubits in a conventional full state vector-based quantum simulator is depicted. The quantum space 201 may always require $2^3(=8)$ vector arrays for three qubits. However, the quantum space 201 is only an example for comparing concepts in the conventional full state vector-based quantum simulator, and is not a memory structure maintained in actual memory by the quantum simulator using the reduced Hilbert space.

A quantum space 202A in the quantum simulator using the reduced Hilbert space is characterized in that it is configured using only a single vector array (i.e., vector array #0), instead of $2^3(=8)$ vector arrays, in initialization stage 203A (Init Z Qubits). A value preserved in vector array #0 is 1, which represents a state amplitude probability value. In this case, the mathematical expression of an initialized quantum state 204A may be represented by $|\psi\rangle = (1)|000\rangle$, indicating that the quantum state has been initialized to a single quantum state $|000\rangle$ with an amplitude probability value of 1.

A state vector changes from the quantum state 204A to a quantum state 202B as a Hadamard gate is applied to qubit 0 (203B) and a Hadamard gate operation is performed.

The state vector changes from the quantum state 202B to a quantum state 202C as an X gate is applied to qubit 2 (203C) and an X gate operation is performed.

As shown in FIG. 2, it can be seen that, when the Hadamard gate is initially applied to qubit 0 (203B), only a single matrix operation is executed. That is, the process 203B of applying the Hadamard gate to qubit 0 uses the value of the $|000\rangle$ state that is already present as the input of the matrix, assumes the amplitude of the $|001\rangle$ state that is not present in memory to be 0, and uses the amplitude of 0 as the input of a unitary matrix for matrix calculation. The process 203B of applying the Hadamard gate to qubit 0 produces $1/\sqrt{2}|000\rangle$ and $1/\sqrt{2}|001\rangle$ as the subsequently calculated result 202B. The process 203B of applying the Hadamard gate to qubit 0 updates only the amplitude value in the same vector array from 1 to $1/\sqrt{2}$ because the $|000\rangle$ state is already present in the memory. In contrast, because the $|001\rangle$ state becomes have a non-zero value with quantum computation, it can be seen that a state vector array is newly added. That is, the existing quantum simulator requires four matrix calculations for each of all $2^3(=8)$ vectors so as to perform the same operation, whereas the quantum simulator using the reduced quantum state space requires only a single matrix operation for the same condition.

The process 203C of applying the X gate to qubit 2 may also be similar to the process 203B of applying the Hadamard gate to qubit 0. Because the process 203C of applying the X gate to qubit 2 executes a calculation on a quantum state having an amplitude, quantum computations may be executed using two matrix operations instead of four matrix operations. Finally, the mathematical expression of the final quantum state 204B to which two gate operations are applied is represented.

In this way, because the quantum simulator using the reduced Hilbert space dynamically manages state vector arrays depending on quantum gate operations, there is an advantage in that faster quantum operations may be executed in a smaller memory space compared to existing techniques. However, this approach still has the problem of optimization of computational cost. The reason for this is that, when an arbitrary quantum gate is given as input, a matrix calculation is unconditionally executed.

For example, it is assumed that an arbitrary qubit, which is not in superposition, is in a $|0\rangle$ state and a Z operation is applied to the qubit. The Z operation has the characteristic of inverting the phase of only the $|1\rangle$ state and exerting no influence on the $|0\rangle$ state. That is, it may be considered that the Z operation causes no quantum change in a qubit in the $|0\rangle$ state, which means that there is no need to perform a quantum operation in the simulator. Nevertheless, the previously filed patent, that is, the quantum simulator using a reduced Hilbert space (Korean Patent Application Publication No. 10-2023-0094098 and U.S. Patent Application Publication No. US2023-0196157) needs to always unconditionally perform matrix operations (four multiplications and two additions) regardless of the characteristics of the quantum state. Furthermore, because such a matrix operation is executed on all state vectors present in the memory, it is difficult to avoid a problem in which a computational load attributable to unnecessary matrix calculations increases in proportion to the number of present state vectors.

Therefore, the quantum simulation acceleration apparatus and method according to embodiments of the present disclosure are intended to improve simulation performance by selectively applying an algorithm depending on the operating characteristics of a diagonal gate or a non-diagonal gate and by performing efficient quantum computations using quantum states of individual qubits, instead of unconditionally applying the matrix operations of quantum gates to all quantum states present in memory in the quantum simulator using a reduced Hilbert space.

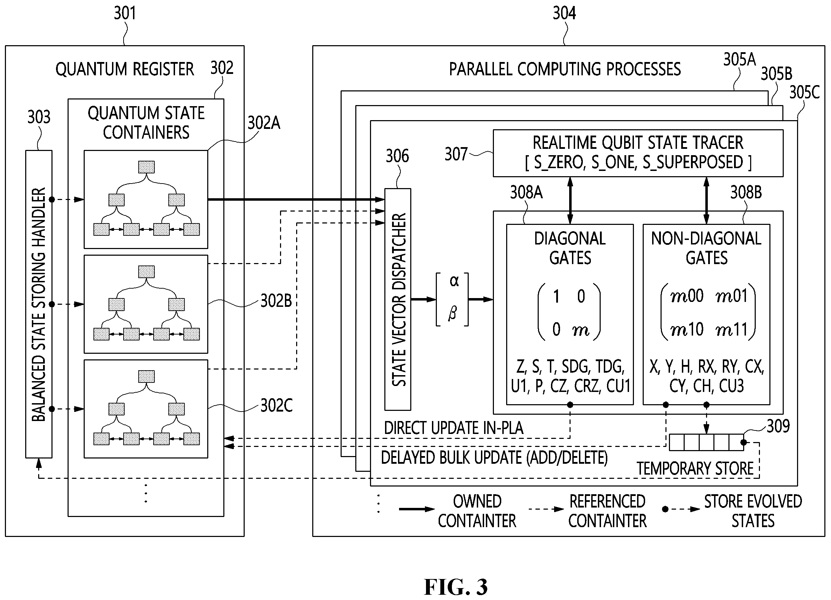

FIG. 3 is a block diagram illustrating a quantum simulation acceleration apparatus according to an embodiment of the present disclosure.

Referring to FIG. 3, the quantum simulation acceleration apparatus of a quantum simulator using a reduced Hilbert space is shown.

The quantum simulation acceleration apparatus according to the embodiment of the present disclosure includes a quantum register 301 and a parallel computing operation unit 304.

The quantum register 301 may store quantum state vector arrays in computer memory.

The quantum register 301 may include a plurality of storage containers (quantum state containers) 302 for managing individual state vectors and a balanced state storing handler 303. The number of storage containers 302 operated by the quantum simulator may vary depending on the number of CPU cores installed in a server. The present disclosure does not specify in detail the number of storage containers 302. The number of storage containers 302 may be statically or dynamically set, but may be variably applied depending on the system environment in the implementation stage of the disclosure.

The balanced state storing handler 303 may store one state vector in any one of the storage containers 302 based on preset rules.

Here, the state storing handler 303 utilizes the quantum index of each state vector as a method for selecting a container in which the corresponding state vector is to be stored, and may follow a uniform state vector distribution rule based on a modular operation such as "quantum index % number of containers."

For example, a state vector |000> may be converted into quantum index "0" and a state vector |010> may be converted into quantum index "2", which means that respective state vectors are stored in container #0 and container #2.

The parallel computing operation unit 304 may perform a matrix calculation by obtaining state vectors from the quantum register 301 when quantum gate input is given.

The parallel computing operation unit 304 may include multiple parallel execution threads 305A to 305C as computing spaces in which quantum computations are performed when arbitrary quantum gate inputs are given. However, since functional operations of all threads are identical, the present disclosure is limited to describing how a single thread operates.

Each of the execution threads 305A to 305C may include a state vector dispatcher 306, a real-time qubit state tracer 307, a diagonal gate processor 308A, and a non-diagonal gate processor 308B.

The state vector dispatcher 306 may read qubit states on which a matrix calculation is to be executed in each execution thread from the quantum register.

Here, the state vector dispatcher 306 may read the quantum state of a qubit stored in the memory, and may configure a one-dimensional (1D) column vector $[\alpha, \beta]$ from the input quantum state of the qubit.

In this case, the state vector dispatcher 306 may configure the 1D column vector $[\alpha, \beta]$ from the qubit state, and may then transfer the column vector as the input of any one of the diagonal gate processor 308A and the non-diagonal gate processor 308B depending on the characteristics of quantum gates.

The state vector dispatcher 306 may establish authorization relationships between the execution threads and the storage containers to ensure data concurrency among all execution threads 305A to 305C, and the types of authorization may be classified into ownership rights and reference rights. The ownership rights may follow the rule of "thread number % number of containers." For example, execution thread #0 may hold ownership rights for storage container #0, and may hold reference rights for the remaining storage containers that are not owned by execution thread #0. All of the execution threads 305A to 305C may have responsibility for matrix calculations on all quantum states kept in their own containers. When one of state vectors $\alpha$ and $\beta$ constituting a unitary matrix is stored in a container that is not owned, all of the execution threads 305A to 305C may read the corresponding state vector with the reference rights.

The real-time qubit state tracer 307 may trace the quantum state of each qubit changing with the quantum gate operation. The present disclosure may define the quantum state of each qubit in three types.

Here, as the quantum state of the qubit, three quantum states may be defined for each qubit depending on the quantum patterns.

Here, the quantum state of the qubit may be defined as three quantum states, that is, S_ZERO for a $\alpha|0>$ state, S_ONE for a $\beta|1>$ state, and S_SUPERPOSED for a $\alpha|0>+\beta|1>$ state in which the qubit is in a superposition.

The quantum state of the qubit may be classified into S_ZERO when the qubit is in the $\alpha|0\geq$ state, S_ONE when the qubit is in the $\beta|1>$ state, and S_SUPERPOSED when the qubit is in a superposition and is in the $\alpha|0>+\beta|1>$ state. The quantum states of the qubit may be maintained independently for all qubits. Here, the real-time qubit state tracer 307 may update change in the qubit state in each quantum gate operation.

Here, the real-time qubit state tracer 307 may update the quantum state stored in the memory based on the qubit state changing in each quantum gate operation.

Each of the diagonal gate processor 308A and the non-diagonal gate processor 308B may execute quantum computation using a given quantum matrix and a unitary matrix.

Each of the diagonal gate processor 308A and the non-diagonal gate processor 308B may execute a quantum gate operation on the one-dimensional (1D) column vector using at least one of a quantum gate having a diagonal component or a quantum gate having a non-diagonal component, or a combination thereof.

Unlike existing techniques which follow the same gate processing rule for all quantum operations, the present disclosure may separately include the diagonal gate processor 308A and the non-diagonal gate processor 308B so as to optimize computing cost. That is, a given unitary matrix may be selectively transferred to the diagonal gate processor 308A or the non-diagonal gate processor 308B according to gate characteristics, thus supporting quantum computations so that quantum computations can be executed at the minimum cost.

The diagonal gate processor 308A and the non-diagonal gate processor 308B may update state vectors, on which quantum computations are completed, back in the quantum register 301.

Here, the diagonal gate processor 308A and the non-diagonal gate processor 308B may follow different storage paths depending on where the quantum computations have been executed.

The diagonal gate processor 308A may directly (in-place) update the result of performing quantum computation in the state vector memory of the storage containers 302 without going through a separate bypass stage. The reason for this is that, in the case of a gate having a diagonal component, only the amplitude value of the corresponding state is changed while the position of a state vector is maintained.

Here, the diagonal gate processor 308A may execute a quantum gate operation of changing only the value of $\beta$ of the 1D column vector $[\alpha, \beta]$ without changing the value of $\alpha$ of the 1D column vector, based on a quantum gate having a value of 1 as a component in a first column and a first row, among the components of a matrix, among quantum gates having a diagonal component.

In this case, the diagonal gate processor 308A may execute a quantum gate operation only on a diagonal component using a quantum gate in which the value of a component in a first column and a first row and the value of a component in a second column and a second row, among the components of a matrix, satisfy an Euler equation among the quantum gates having a diagonal component.

Here, when the quantum gate operation is performed using the quantum gate having the diagonal component, the diagonal gate processor 308A may directly (in-place) update a qubit state, changed as the result of the quantum gate operation, in the memory.

Because the result of performing the quantum computation in the non-diagonal gate processor 308B involves a change in the position of the state vector, the result of computation may be directly stored in the corresponding storage container 302 or may be kept in a separate temporary storage 309 depending on the result of computation. Here, the non-diagonal gate processor 308B may perform bulk update after calculations of all state vectors are terminated. Here, the temporary storage 309 may be maintained independently for each storage container 302 so as to maximize the effect of parallel processing.

Here, the non-diagonal gate processor 308B may execute a quantum gate operation as a multiplication operation between the 1D column vector and the value of a component corresponding to a first column among the components of the matrix of the quantum gate having the non-diagonal component when the quantum state of the qubit is S_ZERO.

Here, when the quantum state of the qubit is S_ONE, the non-diagonal gate processor 308B may execute a quantum gate operation as a multiplication operation between the 1D column vector and a value corresponding to a second column among the components of the matrix of the quantum gate having the non-diagonal component.

Here, when the quantum state of the qubit is S_SUPERPOSED, the non-diagonal gate processor 308B may execute a full matrix operation between the 1D column vector and the matrix of the quantum gate having the non-diagonal component, and may update the quantum state when both the value of the 1D column vector and the result of executing the full matrix operation are greater than 0.

In this case, when the quantum gate operation is performed using the quantum gate having the non-diagonal component, the non-diagonal gate processor 308B may temporarily store the quantum state of the qubit, changed as the result of the quantum gate operation, in the temporary storage, and may bulk update temporarily stored quantum states in the memory after the quantum gate operations of all qubits are terminated.

For example, the diagonal gate processor 308A may include Z, S, T, SDG, TDG, U1, P, CZ, CRZ, and CU1 gates.

The Z gate, also known as the Pauli-Z gate, may be a gate that rotates the qubit state around the Z-axis in quantum rotation, and may convert the phase of the qubit state.

The S gate may be a special form of the P gate, and may apply a phase change when $\phi = \pi/2$.

The T gate may be another gate that applies a phase change, and may correspond to the case where $\phi = \pi/4$ in the P gate.

The SDG(S†) gate may be the Hermitian adjoint (inverse matrix) of the S gate.

The TDG(T†) gate may be the Hermitian adjoint (inverse matrix) of the T gate.

The U1 gate is a unitary gate similar to the P gate, and may be a gate for adding a given phase change $\lambda$.

The P gate (Phase gate), which is a gate for adding a phase to the corresponding state, may indicate a generic phase change, and may adjust phase conversion using the parameter $\phi$.

The Controlled-Z (CZ) gate may be a controlled-Z gate between two qubits. When a control qubit is in the |1> state, the Z gate may be applied to a target qubit. That is, the phase of the target qubit may be inverted.

The CRZ (controlled-RZ) gate may be a controlled-rotation gate, and may apply the RZ($\theta$) gate to the target qubit when the control qubit is in the |1> state. This CRZ gate may be a controlled-gate for rotating the state of the target qubit around the Z-axis. The rotation angle $\theta$ may be given as a parameter.

The CU1 gate may be a controlled-unitary gate, and may apply the U1($\lambda$) gate to the target qubit when the control qubit is in the 11> state. The U1($\lambda$) may indicate a specific phase change $\lambda$, and may represent a more general phase change although it is similar to CRZ.

Further, the non-diagonal gate processor 308B may include X, Y, H, RX, RY, CX, CY, CH, and CU3 gates.

The X gate (Pauli-X gate) may be a NOT gate of a quantum version. The state of a qubit may be inverted from |0> to |1> or from |1> to |0>.

The Y gate (Pauli-Y gate) may be a gate for inverting the state of a qubit with respect to the Y-axis, and may change the phase while swapping the |0> and |1> states.

The H gate (Hadamard gate) may be a gate that turns the qubit state into an equal superposition state.

The RX gate may be a rotation gate that rotates the qubit state around the X-axis, and may change the state depending on the rotation angle $\theta$.

The RY gate may be a rotation gate that rotates the qubit state around the Y-axis, and may change the state depending on the rotation angle $\theta$.

The CX gate (CNOT gate) may be a controlled-X gate, and may invert the state of the qubit by applying the X gate (NOT) to the target qubit when the control qubit is in the 11> state. The CX gate may also be referred to as a CNOT gate, and may be mainly used to entangle the states of two qubits.

The CY gate may be a controlled-Y gate, and may apply the Y gate to the target qubit when the control qubit is in the |1> state.

The CH gate may be a controlled-Hadamard gate. When the control qubit is in the 11> state, the Hadamard gate may be applied to the target qubit.

The CU3 gate may be a controlled-unitary rotation gate, and may perform rotation transform by receiving three parameters $\theta$, $\varphi$, and $\lambda$. When the control qubit is in the |1> state, a unitary transform may be applied to the target qubit.

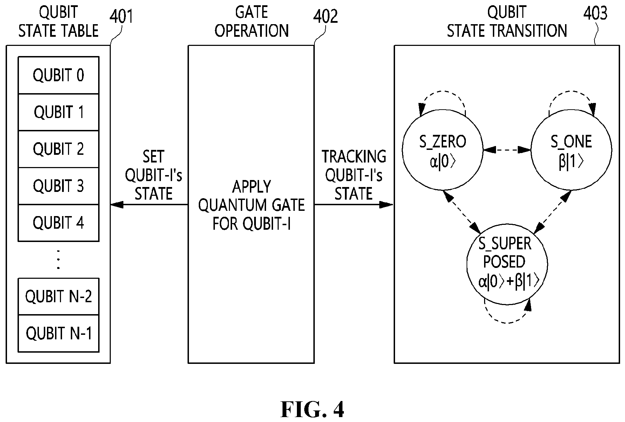

FIG. 4 is a diagram illustrating a qubit state transition process in a reduced Hilbert space according to an embodiment of the present disclosure.

Referring to FIG. 4, a process of tracing the states of individual qubits by the above-described real-time qubit state tracer 307 is illustrated.

A quantum state storage (quantum state table) 401 may store the latest states of respective qubits. The quantum state storage 401 may be located in an independent memory space in the quantum register 301. The quantum state storage 401 may maintain a number of vector arrays identical to the number of qubits, and may keep a value corresponding to one of S_ZERO, S_ONE, and S_SUPERPOSED. The corresponding state value is updated whenever a quantum gate operation is terminated.

A quantum gate operation processor 402 may correspond to the execution threads 305A to 305C illustrated in FIG. 3. A quantum gate execution request may be given for a specific qubit.

In this case, the quantum gate operation processor 402 may trace a quantum state transition 403 depending on the change in the quantum state of an input qubit based on matrix calculation while referring to the most recent state 401 of the qubit. Meanwhile, after the quantum gate operation is completed, the traced qubit state may be updated again to the latest value thereof through the quantum state storage 401.

The qubit state transition 403 may occur in the form of S_ZERO, S_ONE, and S_SUPERPOSED, wherein each state may transition to any other state, including remaining in the same state. For example, it is assumed that the most recent state of the qubit immediately before a quantum operation is performed is the S_ZERO state such as $\alpha$|0>. If the Z, S, or T gate is given as an input quantum gate, the result of this operation may always be $\alpha$|0>, and may have the characteristic of preserving S_ZERO identical to the previous state thereof. That is, the transition of the qubit to its own state is made, wherein no change occurs in the quantum state storage 401. However, when the Hadamard gate is applied to the same quantum state $\alpha$|0>, the state of the corresponding qubit may change to $\alpha$'|0>+ $\beta$|1>, and then a state transition from S_ZERO to S_SUPERPOSED may occur.

The rules of qubit state transition based on the above-described quantum gate characteristics may be represented by the following Table 1.

Table 1

| Qubit State Transition | Applied Gates |
|---|---|
| S_ZERO → S_ZERO | Z, S, T, RZ |
| S_ZERO → S_ONE | X, |
| S_ZERO → S_SUPERPOSED | H , RX , RY |
| S_ONE → S_ZERO | X |
| S_ONE S_ONE | Z, S, T, RZ |
| S_ONE→ S_SUPERPOSED | H, RX, RY |
| S_SUPERPOSED → S_ZERO | - Measure<br>- H if two states have same amplitude<br>- RX, RY, RZ for specific angle |
| S_SUPERPOSED → S_ONE | - Measure<br>- H if two states have same amplitude<br>- RX, RY, RZ for specific angle |

(continued)

| Qubit State Transition | Applied Gates |
|---|---|
| S_SUPERPOSED → S_SUPERPOSED | - X, Z, S, T, RZ<br>- H if two states have different amplitude<br>- RX, RY except but specific angle |

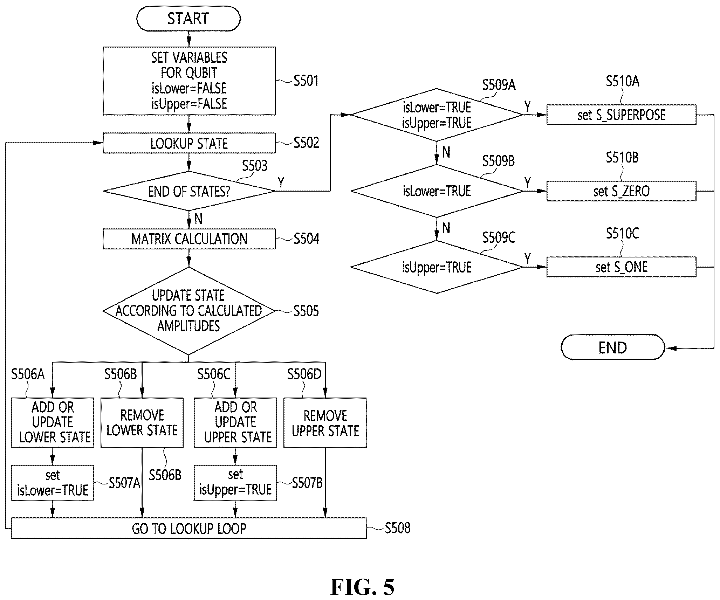

The above Table 1 describes qubit state transitions for respective quantum gates from a conceptual perspective, and a detailed embodiment thereof may be illustrated in FIG. 5. A process of tracing qubit state transitions in the quantum simulation acceleration method illustrated in FIG. 5 may be included in quantum operation processing in the execution threads 305A to 305C described with reference to FIG. 3.

FIG. 5 is an operation flowchart illustrating a quantum simulation acceleration method according to an embodiment of the present disclosure.

Referring to FIG. 5, at step S501, when the input of a quantum gate is given, an execution thread 305 may first define two variables isLower and isUpper required for tracing the state of a qubit.

At step S501, the two variables may be initialized to a FALSE state, and may be updated in such a way that, when a quantum bit component corresponding to the input qubit is |0> in the state to be stored in the quantum register 301 after matrix calculation, the variable isLower is updated to TRUE, and when the quantum bit component is |1>, the variable isUpper is updated to TRUE.

At step S502, the execution thread 305 may look up and fetch a one-dimensional (1D) column vector [α, β] from the quantum register 301.

That is, at step S502, each execution thread 305 may read a qubit state on which matrix calculation is to be executed from the quantum register 301.

Here, at step S502, the qubit state may be read form the memory, and the 1D column vector [α, β] may be configured from the quantum state of the input qubit.

In this case, the 1D column vector [α, β] may be configured from the read qubit state, and may then be transferred as input of any one of the diagonal gate processor 308A and the non-diagonal gate processor 308B depending on the characteristics of the quantum gate.

At step S502, authorization relationships between the execution threads and the storage containers may be established to ensure data concurrency among all execution threads 305A to 305C, and the types of authorization may be classified into ownership rights and reference rights. The ownership rights may follow the rule of "thread number % number of containers." For example, execution thread #0 may hold ownership rights for storage container #0, and may hold reference rights for the remaining storage containers that are not held by execution thread #0. All of the execution threads 305A to 305C may have responsibility for matrix calculations on all quantum states kept in their own containers. When one of state vectors α and β constituting a unitary matrix is stored in a container that is not owned, all of the execution threads 305A to 305C may read the corresponding state vector with the reference rights.

At step S503, when the calculation of all state vectors assigned to the execution thread 305 is not yet completed, quantum gate operations may be repeatedly executed until the calculation is completed at step S504.

At step S504, a matrix calculation may be performed on a given state vector matrix.

That is, at step S504, a quantum gate operation on the 1D column vector may be executed using at least one of a quantum gate having a diagonal component or a quantum gate having a non-diagonal component, or a combination thereof.

Here, at step S504, quantum computations, each using a given quantum matrix and a unitary matrix, may be executed.

That is, at step S504, a quantum gate operation on the 1D column vector may be executed using at least one of a quantum gate having a diagonal component or a quantum gate having a non-diagonal component, or a combination thereof.

Unlike existing techniques which follow the same gate processing rule for all quantum operations, the present disclosure may separately include the diagonal gate processor 308A and the non-diagonal gate processor 308B so as to optimize computing cost. That is, at step S504, a given unitary matrix may be selectively transferred to the diagonal gate processor 308A or the non-diagonal gate processor 308B according to gate characteristics, thus supporting quantum computations so that quantum computations can be executed at the minimum cost.

Here, at step S504, the diagonal gate processor 308A may directly (in-place) update the result of performing quantum computation in the state vector memory of the storage containers 302 without going through a separate bypass stage. The reason for this is that, in the case of a gate having a diagonal component, only the amplitude value of the corresponding state is changed while the position of a state vector is maintained.

Here, at step S504, the diagonal gate processor 308A may execute a quantum gate operation of changing only the value of β of the 1D column vector [α, β] without changing the value of α of the 1D column vector, based on a quantum gate having a value of 1 as a component in a first column and a first row, among the components of a matrix, among quantum gates having a diagonal component.

Here, at step S504, the diagonal gate processor 308A may execute a quantum gate operation only on a diagonal component using a quantum gate in which the value of a component in a first column and a first row and the value of a component in a second column and a second row, among the components of a matrix, satisfy an Euler equation among the quantum gates having a diagonal component.

Further, at step S504, when the quantum gate operation is performed using the quantum gate having the diagonal component, the diagonal gate processor 308A may directly (in-place) update a qubit state, changed as the result of the quantum gate operation, in the memory.

At step S504, because the result of performing the quantum computation in the non-diagonal gate processor 308B involves a change in the position of the state vector, the result of computation may be directly stored in the corresponding storage container 302 or may be kept in a separate temporary storage 309 depending on the result of computation.

Here, at step S504, the non-diagonal gate processor 308B may perform bulk update after calculations of all state vectors are terminated. Here, the temporary storage 309 may be maintained independently for each storage container 302 so as to maximize the effect of parallel processing.

Here, at step S504, the non-diagonal gate processor 308B may execute a quantum gate operation as a multiplication operation between the 1D column vector and the value of a component in a first column among the components of the matrix of the quantum gate having a non-diagonal component when the quantum state of the qubit is S_ZERO.

Here, at step S504, the non-diagonal gate processor 308B may execute a quantum gate operation as a multiplication operation between the 1D column vector and the value of a component corresponding to a second column among the components of the matrix of the quantum gate having a non-diagonal component when the quantum state of the qubit is S_ONE.

Here, at step S504, when the quantum state of the qubit is S_SUPERPOSED, the non-diagonal gate processor 308B may execute a full matrix operation between the 1D column vector and the matrix of the quantum gate having the non-diagonal component, and may update the quantum state when both the value of the 1D column vector and the result of executing the full matrix operation are greater than 0.

Furthermore, at step S504, when the quantum gate operation is performed using the quantum gate having the non-diagonal component, the non-diagonal gate processor 308B may temporarily store the quantum state, changed as the result of the quantum gate operation, in the temporary storage, and may bulk update temporarily stored quantum states in the memory after the quantum gate operations of all qubits are terminated.

At step S505, the updated quantum state may be obtained through matrix calculations, and four branches ranging from steps S506A to S506D may occur according to the amplitude values of the result.

At step S506A, from the standpoint of the quantum states of the input qubit, addition or update of the state bit of the |0> component may be performed.

At step S507A, addition or update of the state bit of the |0> component occurs, and the variable isLower may be changed to TRUE.

Here, at step S507A, the state transition of the qubit depending on the result of the current calculation may be processed to perform calculation on a subsequent state.

At step S506B, the state bit of the |0> component may be removed.

At step S506C, addition or update of the state bit of the |1> component may be performed.

At step S507B, addition or update of the state bit of the |1> component occurs, and the variable isUpper may be changed to TRUE.

Here, at step S507B, the state transition of the qubit depending on the result of the current calculation may be processed to perform calculation on a subsequent state.

At step S506D, the state bit of the component 11> may be removed.

At step S508, until the state transition of the qubit depending on the result of the current calculation is processed, the process may return to step S502 of looking up and fetching the 1D column vector [α, β], and the corresponding execution thread may be terminated when all state transitions are processed.

Here, as the quantum state of the qubit, three quantum states may be defined for each qubit depending on the quantum bit patterns.

Here, the quantum states of the qubit may be defined as three quantum states, that is, S_ZERO for the state α|0>, S_ONE for the state β|1>, and S_SUPERPOSED for the state α|0>+β|1> in which the qubit is in a superposition.

At steps S509A to S509C, the quantum state of the qubit changing with the quantum gate operation may be traced. The present disclosure may define the quantum states of each qubit in three types.

Here, at steps S509A to S509C, the change in the quantum state of the qubit may be updated in each quantum gate operation.

At step S509A, the final state of the qubit may be determined depending on the values of the variables isLower and isUpper.

Here, at step S509A, when both the variables isLower and isUpper are TRUE, the state of the qubit may be updated to S_SUPERPOSED, and thereafter the execution thread may be terminated at step S510A.

Here, at step S509B, when only the variable isLower is TRUE, the state of the qubit may be updated to S _ZERO, and thereafter the execution thread may be terminated at step S510B.

Here, at step S509C, when only the variable isUpper is TRUE, the state of the qubit may be updated to S_ONE, and thereafter the execution thread may be terminated at step S510C.

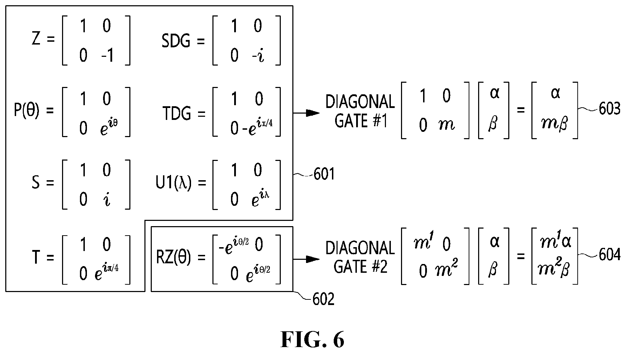

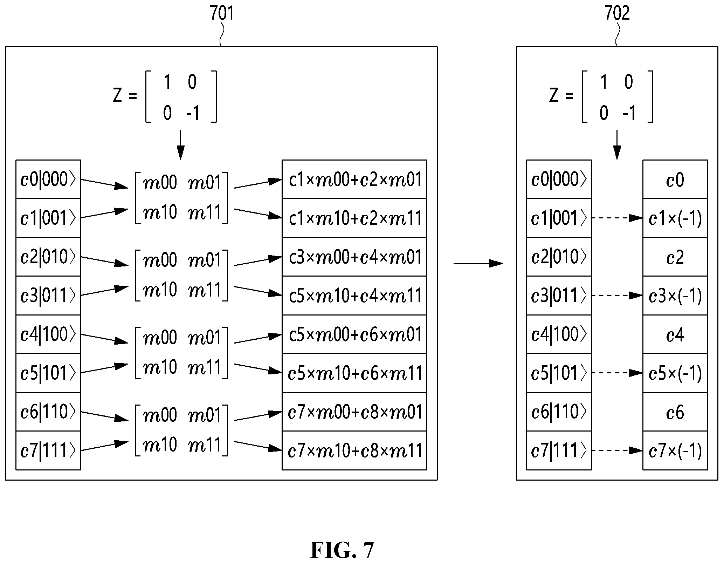

FIG. 6 is a diagram illustrating the characteristics of a quantum matrix operation of diagonal gates according to an embodiment of the present disclosure. FIG. 7 is a diagram illustrating the result of comparing the effects of calculation processes on diagonal gates according to an embodiment of the present disclosure.

The diagonal gates refer to quantum operations in which remaining components other than diagonal components in a matrix are 0, and gates following diagonal matrix characteristics among quantum gates may be classified into two types in the present disclosure.

Referring to FIG. 6, a first diagonal gate type 601 indicates a quantum gate in which the value of a component in a first column and a first row, among components of the matrix, is 1. This type of quantum gate 601 may include Z, P, S, T, SDG, TDG, and U1 gates.

The Z gate, also known as the Pauli-Z gate, may be a gate that rotates the qubit state around the Z-axis in quantum rotation, and may convert the phase of the qubit state.

The P gate (Phase gate), which is a gate for adding a phase to the corresponding state, may indicate a generic phase change, and may adjust phase conversion using the parameter $\phi$.

The S gate may be a special form of the P gate, and may apply a phase change when $\phi = \pi/2$.

The T gate may be another gate that applies a phase change, and may correspond to the case where $\phi = \pi/4$ in the P gate.

The SDG(St) gate may be the Hermitian adjoint (inverse matrix) of the S gate.

The TDG(Tt) gate may be the Hermitian adjoint (inverse matrix) of the T gate.

The U1 gate is a unitary gate similar to the P gate, and may be a gate for adding a given phase change $\lambda$.

The RZ gate may be a rotation gate for rotating the qubit state around the Z-axis in quantum computing. The RZ gate may convert the phase of the state of the qubit by rotating the qubit state at an arbitrary angle along the Z-axis. This may be defined according to the parameter $\theta$, which indicates a rotation angle.

The gates 601 may have a unique property of updating only the value of $\beta$ without changing the value of $\alpha$ for a 1D column vector $[\alpha, \beta]$ 603. That is, in conventional technology, a standardized formula such as $[(1 \times \alpha) + (0 \times \beta) = \alpha]$ should have been applied to the matrix such as the 1D column vector $[\alpha, \beta]$ 603. However, in this case, the value of $\alpha$ is not changed, and thus calculation itself is not necessary. Therefore, a calculation needs to be applied only to $\beta$, and this also enables quantum computation to be completed through only one calculation such as $[(m \times \beta) = m\beta]$ instead of $[(0 \times \alpha) + (m \times \beta) = m\beta]$.

A second diagonal gate type 602 is a quantum gate in which the value of a component in a first column and a first row and the value of a component in a second column and a second row, among the components of the matrix, are given by an Euler equation. The RZ gate, which performs a rotation around the Z-axis on the Bloch sphere, may correspond to this type. This type may have a characteristic similar to that of the quantum gate 601, and may be processed through simplified formulae "$m^1 \times \alpha = m^1\alpha$" and "$m^2 \times \beta = m^2\beta$" instead of "$(m^1 \times \alpha) + (0 \times \beta) = m^1\alpha$" and "$(0 \times \alpha) + (m^2 \times \beta) = m^2 \beta$", thus removing unnecessary computing costs.

Further, each diagonal gate has another unique property indicating that the position of a unit vector in the matrix is not varied. That is, in-place update at a memory position at which the qubit state is stored may be performed without moving a state vector entry present in a quantum register.

Referring to FIG. 7, it can be seen that the effects of the above-described diagonal gate calculation process are explained through actual detailed calculation examples.

FIG. 7 shows a comparison between the diagonal gate calculation process 701 of a conventional quantum simulation apparatus and the diagonal gate calculation process 702 of a reduced Hilbert space according to an embodiment of the present disclosure.

For clear description, a quantum register composed of three qubits is assumed. It is assumed that a state vector array having the same $2^3(=8)$ values greater than 0 is present in both the conventional calculation process 701 and the calculation process 702 of the present disclosure.

It is assumed that each of the conventional calculation process 701 and the calculation process 702 of the present disclosure uses the Z gate that is a representative diagonal gate as input.

When a Z gate operation is performed, the conventional calculation process 701 may perform a total of four matrix calculations by configuring all state vectors as the column vector $[\alpha,\beta]$. Individual matrix calculations are $[(m00 \times \alpha) + (m01$

$\times \beta) = \alpha'$] and [(m10 $\times \alpha$) + (m11 $\times \beta$) = $\beta'$], and thus a total of 16 multiplications and 8 additions are required in order to process the Z gate.

In contrast, the calculation process 702 proposed in the present disclosure requires only a reduced type of calculations instead of applying full matrix calculations. That is, because the calculation process 702 of the present disclosure does not cause a change in a quantum state for $\alpha$, the calculation itself is not performed, and the amplitude value of the state may be updated by multiplying -1 only by component $\beta$. In this case, the processing of the Z gate may be completed only by a total of four multiplications.

Based on the above description, the present disclosure may be characterized in that, when quantum gate input is given, a quantum operation algorithm is selectively applied depending on the characteristics of the gate. Unlike the conventional calculation process where unconditional calculation methods are applied to all quantum gates, the present disclosure may have the advantage of reducing computing costs by applying algorithms that take into account the operation methods of quantum gates.

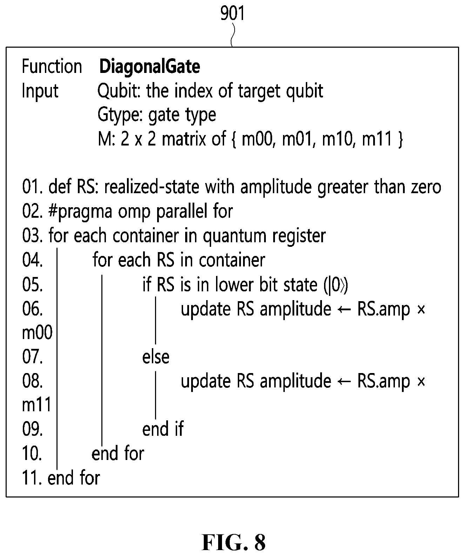

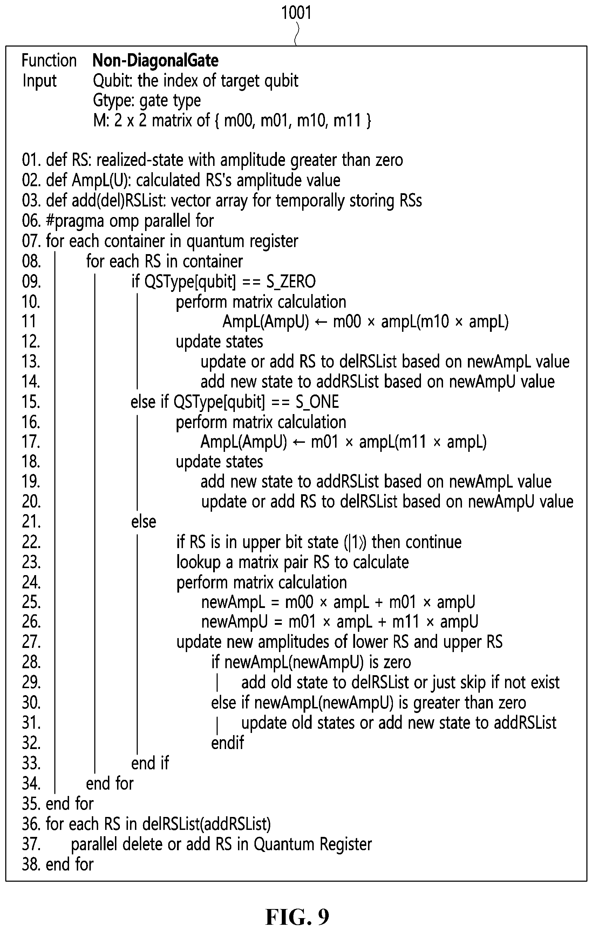

In order to describe in detail differences and advantages related to the calculation processes, the conventional method for applying quantum gates have been described in FIG. 7, and detailed methods of the quantum gate algorithm proposed in the present disclosure will be described below in FIGS. 8 and 9.

FIG. 8 is a diagram illustrating the pseudo-code of a diagonal gate processing algorithm according to an embodiment of the present disclosure.

Referring to FIG. 8, diagonal gates may correspond to Z, P, S, T, SDG, TDG, U1, and RZ gates.

A diagonal gate processing algorithm 901 according to an embodiment of the present disclosure may allocate container storages to execution threads in line 02 and line 03 when arbitrary quantum gate input is given. This means that each execution thread has the ownership of the container storage allocated thereto. Thereafter, in line 04, each thread may sequentially read state vectors stored in the allocated container storage while going around all of the state vectors.

The diagonal gate processing algorithm 901 according to the embodiment of the present disclosure has a great characteristic of not configuring state pairs that are targets of matrix calculations, as in the case of conventional technology. The reason for this is that only one multiplication is required only for a $\beta|1>$ state without applying a 2x2 matrix calculation to given input gates. However, the RZ gate requires one multiplication for each of a $\alpha|0>$ state and the $\beta|1>$ state.

The diagonal gate processing algorithm 901 according to the embodiment of the present disclosure may execute a quantum operation of the diagonal gate through a procedure from line 08 to line 12.

In line 08, it is determined whether the quantum bit component of an input qubit in a quantum state obtained from the container storage is $\alpha|0>$.

When the quantum bit component is the $\alpha|0>$ component, m00 corresponding to a first column and a first row of the matrix may be multiplied by the value of $\alpha$, and the result of multiplication may be updated in the corresponding state vector. This case may be limitedly applied only to the RZ gate.

When the quantum bit component is a $\alpha|1>$ component, m11 corresponding to a second column and a second row of the matrix may be multiplied by the value of $\beta$ and the result of multiplication may be updated in the corresponding state vector. This case may be applied to all diagonal gates.

The effects of the above-described diagonal algorithm may be summarized.

First, state vector pairs to which a matrix calculation is to be applied are not configured.

Second, each thread may promptly process only state vectors in the container storage allocated thereto without concurrency interference between execution threads.

Third, the number of quantum matrix calculations for a [$\alpha$, $\beta$] state pair may be reduced from an existing number corresponding to "four multiplications + two additions" to a number corresponding to "one multiplication or two multiplications for a special case" . The two multiplications for the special case may correspond only to the case where the RZ gate is executed while the qubit has the state $\alpha|0> + \beta|1>$.

FIG. 9 is a diagram illustrating a pseudo code of a non-diagonal gate processing algorithm according to an embodiment of the present disclosure.

Referring to FIG. 9, a non-diagonal gate processing algorithm 1001 according to the embodiment of the present disclosure may be applied all single-qubit gates except for diagonal gates.

In line 06 to line 08, container storages may be allocated to execution threads in the same manner as FIG. 8, and state vectors may be sequentially read from a container storage to which each execution thread is allocated. Here, one state read by the execution thread from the corresponding container storage may be referred to as a Reading State (RS).

The non-diagonal gate execution algorithm proposed in the present disclosure has the great characteristic of showing different processing methods depending on the quantum states of a qubit.

In a first condition, when the quantum state of a qubit is S_ZERO, as in the case of line 09, the quantum state of a target qubit may correspond to $\alpha|0>$. Because $\beta$ in a $\beta|1>$ component is 0, a calculation of components m01 and m11 is not performed, and two multiplications such as a multiplication between $\alpha$ and m00 and a multiplication between $\alpha$ and m10 may be executed. The final quantum state after the calculations may be $(\alpha \times m00)|0> + (\alpha \times m10)|1>$, and may conform to the following update rules depending on the result value of the calculations.

When $\alpha \times$ m00 = 0, the amplitude value of the existing RS may be 0, and thus the RS may be a state vector that no longer needs to be maintained in the reduced Hilbert space. Therefore, in order to delete the RS stored in the container, the RS may be kept in delRSList that is a temporary storage space.

When $\alpha \times$ m00 > 0, the existing RS value present in the container memory may be directly updated only by changing only the state value of the state vector without changing the position of the state vector.

When $\alpha \times$ m10 = 0, no matrix calculation is applied.

When $\alpha \times$ m10 > 0, a new state vector ($\alpha \times$ m10)|1> may be kept in addRSList that is a temporary storage space so as to add the new state vector to the container.

In a second condition, as in the case of line 15, the case where the quantum state of a qubit is S_ONE may correspond to the state in which the quantum state of a target qubit is β|1>. Because α in the α|0> component is 0 is 0, a calculation of m00 and m10 components is not performed, and two multiplications such as a multiplication of β and m01 and a multiplication of β and m11 may be executed. The final quantum state after calculation may be (β × m01)|0> + (β × m11)|1>, and may conform to the following update rules depending on the result value of the calculation.

When β × m01 = 0, no matrix calculation is applied.

When β × m01 > 0, a new state vector (β × m01)|0> may be kept in addRSList that is a temporary storage space so as to add the new state vector to the container.

When β × m11 = 0, the amplitude value of the existing RS may be 0, and thus the RS may be a state vector that no longer needs to be maintained in the reduced Hilbert space. Therefore, in order to delete the RS stored in the container, the RS may be kept in delRSList that is a temporary storage space.

When β × m11 > 0, the existing RS value present in the container storage may be directly updated only by changing only the state value of the state vector without changing the position of the state vector.

In a third condition, the case where the quantum state of a qubit is S_SUPERPOSED, as in the case of line 21, may correspond to the state in which the quantum state of a target qubit is in a superposition, such as α|0> + β|1>.

First, whether the state bit of the target qubit in the read RS is |0> or |1> is checked, as in the case of line 22. When the state bit is |1>, the process may return to line 08, which is the start of the loop, to perform the corresponding process. The reason for this is that, in order to prevent repeated calculations between threads for the same state pairs, a calculation is limitedly performed only for a thread in which an RS having a state bit of |0> is obtained among the state vectors of the target qubit in a superposition. By means of this, a process of verifying whether calculations of state pairs have been completed in other execution threads in the conventional quantum gate processing algorithm may be skipped.

In line 23, a one-dimensional (1D) column vector [α, β] may be configured by obtaining state vectors corresponding to a calculation pair of RS.

In line 24 to line 26, a full matrix operation may be applied to the 1D column vector [α, β]. Here, in line 24 to line 26, four multiplications and two additions may be performed in the same manner as the conventional technique.

In line 27 to line 32, the results of calculation may be stored in the quantum register. In line 27 to line 32, when both the input vectors α and β are greater than 0 and both calculation results α' and β' are also greater than 0, the corresponding state vectors may be directly updated in the memory of the container storage. The reason for this is that, in the corresponding condition, the positions of the two state vectors are not varied, and only the values of calculated results are changed. That is, line 27 to line 32 may be completed by promptly updating only values such as α→α' and β→β' at the memory position of the same state vector because the calculation result is α'|0> + β'| 1> for the input quantum state α|0> + β|1>. In the remaining cases other than the above condition, line 27 to line 32 may store state vectors to be added or deleted in addRSList or delRSList depending on the result of calculation, and may reflect the temporarily stored addRSList or delRSList in container storages, as in the case of line 36 and line 37.

Meanwhile, in addition to the exemplified algorithm and procedures, the present disclosure may present detailed cost models for executing quantum gates through the following Equations.

$$COST = \sum Calculation + Update$$
$$= \sum \{(M \times P) + (UD \times P)\}$$

where, P : # of pair states for matrix calculation
M : cost of amplitude multiplication
UD : cost of direct state update

(1)

It can be seen that Equation (1) indicates a cost analysis model for a diagonal gate processing algorithm according to an embodiment of the present disclosure.

In Equation (1), P denotes the number of state vector pairs requiring calculations.

In Equation (1), M is the cost of multiplication required for a matrix calculation.

In Equation (1), UD is the cost of in-place updating the result of the matrix calculation in the memory of a container storage in which the quantum states are kept without going through a temporary storage space.

The diagonal gate processing algorithm may be composed of a reduced matrix operation and a state vector update step based on the operation results. Compared to conventional technology, unnecessary processing procedures may be minimized, and fast execution may be ensured through a reduced calculation instead of a full matrix calculation.

$$COST = \sum Calculation + Update$$
$$= \sum \left(2M \times P\right) + \left(\left(\left(UD \times R\right) + \left(UI \times \left(1 - R\right)\right)\right) \times 2P\right)$$

$$
\begin{aligned}
\text{where,}\quad &P \quad : \text{\# of pair states for matrix calculation}\\
&M \quad : \text{cost of amplitude multiplication}\\
&UD \quad : \text{cost of direct state update}\\
&R \quad : \text{ratio of direct state update}\\
&UI \quad : \text{cost of indirect state update}
\end{aligned}
$$

$$(2)$$

It can be seen that Equation (2) shows the cost analysis model S_ZERO or S_ONE of the non-diagonal gate processing algorithm according to an embodiment of the present disclosure.

Referring to Equation (2), the cost analysis model for the non-diagonal gate processing algorithm when the quantum state of a target qubit, on which a quantum gate is to be executed, is S_ZERO or S_ONE is represented.

In Equation (2), P denotes the number of state vector pairs requiring calculations.

In Equation (2), M is the cost of multiplication required for a matrix calculation.

In Equation (2), UD is the cost of in-place updating the result of the matrix calculation in the memory of a container storage in which the quantum states are kept without going through a temporary storage space.

In Equation (2), R denotes the ratio of the number of direct (in-place) updates (UD) in the container storage without going through a temporary storage space to the total number of quantum state pairs P. That is, when the ratio of UD to an arbitrary P is R, the ratio of UI may be 1-R.

In Equation (2), LTI is the cost of applying the result of a matrix calculation to state vectors through an indirect method via the temporary storage space.

Although there are differences depending on the specifications of a server where computing is executed, on average, the speed of UD can be significantly faster than that of UI.

When the quantum state of the target qubit is S_ZERO or S_ONE, a state vector pair for the corresponding state has an amplitude of 0, and thus the state vector pair may not be present in a container storage. Therefore, Equation (2) does not require a search process for configuring a state pair or a process of verifying whether the calculation of the state pair has been completed. Therefore, only the calculation of a matrix and the update of the calculation result may be needed for the quantum state handled by the execution thread.

Equation (2) may decrease the processing cost compared to the conventional technology by using only a maximum of two multiplications because the value of one of qubit states of the column vector [$\alpha$, $\beta$] is 0 even in matrix calculation.

Meanwhile, Equation (2) may execute a full matrix operation in the case of a non-diagonal gate, and may directly store (UD) the result of the full matrix operation in a container storage or may indirectly store (UI) the same via a temporary storage space, together with direct storage, depending on the result of the calculated state. The cost of UD is significantly lower than that of UI, and thus it can be predicted that the cost of Equation (2) may be greatly reduced compared to the conventional technology in terms of storage cost.

$$COST = \sum Find + Calculation + Update$$

$$= \sum (F \times P) + (4M + 2A) \times P + \left( \left( (UD \times R) + (UI \times (1 - R)) \right) \times 2P \right)$$

where, F : cost of finding state pair
P : # of pair states for matrix calculation
M : cost of amplitude multiplication
A : cost of amplitude addition
UD : cost of direct state update
R : ratio of direct state update
UI : cost of indirect state update

(3)

Equation (3) represents the cost analysis model S_SUPERPOSED of a non-diagonal gate processing algorithm according to an embodiment of the present disclosure.

Referring to Equation (3), the cost analysis model of the non-diagonal gate processing algorithm when the quantum state of a target qubit on which a quantum gate is to be executed is S_SUPERPOSED is represented.

In Equation (3), F is the cost of finding the state pair of a 1D column vector $[\alpha, \beta]$.

In Equation (3), P denotes the number of state vector pairs requiring calculations.

In Equation (3), M is the cost of multiplication required for a matrix calculation.

In Equation (3), A is addition cost for matrix calculation.

In Equation (3), UD is the cost of in-place updating the result of the matrix calculation in the memory of a container storage in which the quantum states are kept without going through a temporary storage space.

In Equation (3), R denotes the ratio of the number of direct (in-place) updates (UD) in the container storage without going through a temporary storage space to the total number of quantum state pairs P. That is, when the ratio of UD to an arbitrary P is R, the ratio of UI may be 1-R.

In Equation (3), UI is the cost of applying the result of a matrix calculation to state vectors through an indirect method via the temporary storage space.

Although there are differences depending on the specifications of a server where computing is executed, on average, the speed of UD can be significantly faster than that of UI.

Because Equation (3) limitedly performs calculations only for a thread in which RS, in which the state bit of a target qubit among read state vectors is |0>, is obtained, in order to prevent repeated calculations between threads for the same state pairs, a process of verifying whether calculation on state pairs has been completed is not needed, unlike conventional technology.

Furthermore, Equation (3) separately supports UD and UI depending on the results of calculation, as in the case of Equation 2, even in a method for storing the results of calculation in the container storages, thus reducing processing costs compared to the conventional technology.

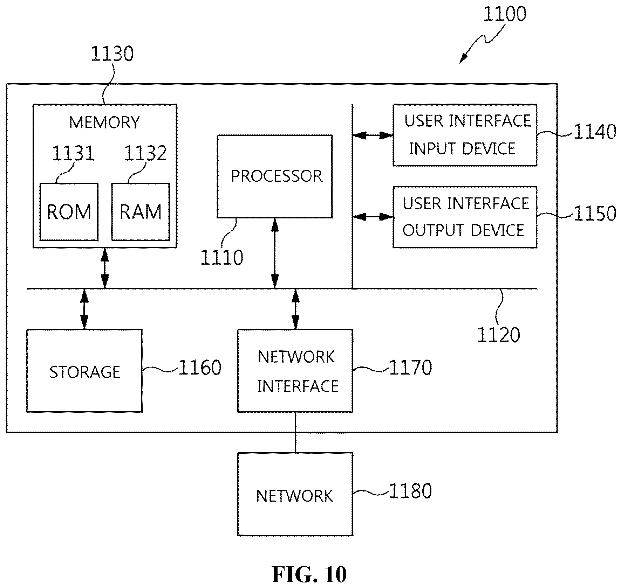

FIG. 10 is a diagram illustrating a computer system according to an embodiment of the present disclosure

Referring to FIG. 10, a quantum simulation acceleration apparatus according to an embodiment of the present disclosure may be implemented in a computer system 1100 such as a computer-readable storage medium. As shown in FIG. 10, the computer system 1100 may include one or more processors 1110, memory 1130, a user interface input device 1140, a user interface output device 1150, and storage 1160, which communicate with each other through a bus 1120. The computer system 1100 may further include a network interface 1170 connected to a network 1180. Each processor 1110 may be a Central Processing Unit (CPU) or a semiconductor device for executing programs or processing instructions stored in the memory 1130 or the storage 1160. Each of the memory 1130 and the storage 1160 may be any of various types of volatile or nonvolatile storage media. For example, the memory 1130 may include Read-Only Memory (ROM) 1131 or Random Access Memory (RAM) 1132.

Further, a quantum simulation acceleration apparatus according to an embodiment of the present disclosure may include all types of apparatuses, devices and machines for processing digital and/or quantum data, such as a programmable digital processor, a programmable quantum processor, a digital computer, a quantum computer, a multi-digital and quantum processor or computer, or a combination thereof. The apparatus may be or further include a special-purpose logic circuit, such as a Field Programmable Gate Array (FPGA), an Application-Specific Integrated Circuit (ASIC), or a quantum simulator, i.e., a quantum data processing device designed to simulate or generate information for a specific quantum system. In particular, the quantum simulator is a special-purpose quantum computer that lacks a function capable of performing general-purpose quantum computations. In addition to hardware, the apparatus may optionally include code that creates an execution environment for digital and/or quantum computer programs, for example, code that configures processor firmware, a protocol stack, a database management system, an operating system, or a combination of one or more thereof.

Furthermore, the computer system according to an embodiment of the present disclosure may be used on a classical quantum simulator of a quantum circuit that can be executed on a classical computer. The classical quantum simulator may be executed on a cloud computing platform that accesses a plurality of computing nodes in parallel or a distribution manner. In some cases, all or part of quantum mechanical energy and/or electronic structure calculations may be performed using the classical quantum simulator.

Furthermore, the classical quantum simulator may be a quantum mechanical system composed of multiple fabricated qubits. The classical quantum simulator can be designed to simulate quantum systems by using physically different but mathematically equivalent or approximately equivalent systems. In the classical quantum simulator, each qubit can be implemented using ions from strings of trapped atomic ions within linear radio frequency traps. A source of bias, known as a local field bias, may be coupled to each qubit. The local field biases on the qubits may be programmable and controllable. In some cases, a qubit control system including a digital processing unit can be connected to a qubit system, and can enable the programming and adjustment of the local field biases on the qubits.

A quantum simulation acceleration apparatus according to an embodiment of the present disclosure may include one or more processors 1110 and memory 1130 configured to store at least one program that is executed by the one or more processors 110, wherein the memory 1130 stores a quantum state of a qubit, and the at least one program is configured to configure a one-dimensional (1D) column vector $[\alpha, \beta]$ from the quantum state of the qubit that is input by reading the quantum state of the qubit from the memory, execute a quantum gate operation on the 1D column vector using at least one of a quantum gate having a diagonal component or a quantum gate having a non-diagonal component, or a combination thereof, and trace the quantum state of the qubit changing depending on the quantum gate operation.

Here, the quantum state of the qubit may be defined as three quantum states for each qubit depending on a qubit pattern.

Here, the quantum state of the qubit may be defined as three quantum states including S_ZERO for a $\alpha|0>$ state, S_ONE for a $\beta|1>$ state, and S_SUPERPOSED for a $\alpha|0>+ \beta|1>$ state when the qubit is in a superposition.

Here, the at least one program may be configured to execute a quantum gate operation that changes only a value of $\beta$ without changing a value of $\alpha$ in the 1D column vector $[\alpha, \beta]$ using a quantum gate, in which a value of a component in a first column and a first row, among components of a matrix, is 1, among quantum gates having the diagonal component.

Here, the at least one program may be configured to execute the quantum gate operation only on a diagonal component using a quantum gate, in which the value of the component in the first column and the first row and a value of a component in a second column and a second row, among the components of the matrix, satisfy an Euler equation, among quantum gates having the diagonal component.

Here, the at least one program may be configured to execute the quantum gate operation as a multiplication operation between the 1D column vector and a value of a component corresponding to a first column, among components of a matrix of the quantum gate having the non-diagonal component, when the quantum state of the qubit is S ZERO.

Here, the at least one program may be configured to execute the quantum gate operation as a multiplication operation between the 1D column vector and a value of a component corresponding to a second column, among components of a matrix of the quantum gate having the non-diagonal component, when the quantum state of the qubit is S_ONE.

Here, the at least one program may be configured to execute a full matrix operation between the 1D column vector and a matrix of the quantum gate having the non-diagonal component and to update the quantum state of the qubit only in a case where both a value of the 1D column vector and a result of executing the full matrix operation are greater than 0 when the quantum state of the qubit is S_SUPERPOSED.

Here, the at least one program may be configured to update the quantum state of the qubit stored in the memory based on a quantum state changing in each quantum gate operation.

Here, the at least one program may be configured to, when the quantum gate operation is executed using the quantum gate having the diagonal component, directly update the quantum state of the qubit, changed with a result of the quantum gate operation, in the memory.

Here, the at least one program may be configured to, when the quantum gate operation is executed using the quantum gate having the non-diagonal component, temporarily store the quantum state of the qubit, changed with a result of the quantum gate operation, in a temporary storage, and bulk update temporarily stored quantum states in the memory after quantum gate operations on all qubits are terminated.

The quantum simulation acceleration apparatus and method according to embodiments of the present disclosure relate to a method and an apparatus for accelerating quantum simulation using a classical computer.

More specifically, the quantum simulation acceleration apparatus and method according to embodiments of the present disclosure are intended to achieve efficient quantum simulation in a reduced Hilbert space targeting quantum states with physical reality.

Further, the quantum simulation acceleration apparatus and method according to embodiments of the present disclosure enable high-speed quantum simulations with lower computational costs than conventional methods in consideration of the fact that the quantum computational characteristics of respective gates are different from each other, unlike conventional quantum simulation methods that follow the mathematical models of quantum gates without change.

Furthermore, the quantum simulation acceleration apparatus and method according to embodiments of the present disclosure can provide performance improvements of several tens of times or more compared to conventional technologies through the application of selective algorithms based on the operational characteristics of diagonal or non-diagonal gates, and efficient quantum computations using the quantum states of individual qubits.

Furthermore, the quantum simulation acceleration apparatus and method according to embodiments of the present disclosure can verify that, in accordance with the results of simulations conducted on an actual Linux server, diagonal gates exhibited the effect of performance improvement of about 30 to 130 times and non-diagonal gates exhibited the effect of performance improvement of about 12 to 25 times compared to conventional technologies.

Furthermore, the quantum simulation acceleration apparatus and method according to embodiments of the present disclosure can be combined with a conventional classical quantum simulation apparatus as individual element technologies, and the integrated configuration of the technologies can be implemented in the form of a completed quantum simulator.

The present disclosure may achieve efficient quantum simulations in a reduced Hilbert space targeting quantum states having physical reality.

Further, the present disclosure may perform fast quantum simulations with lower computational costs compared to existing methods in consideration of the fact that quantum computational characteristics of quantum gates are different from each other.

Furthermore, the present disclosure may utilize quantum simulations in fields such as quantum security, materials science, chemistry, and pharmacology, such as by precisely simulating complex molecular structures and reactions in drug development, by analyzing the properties of materials at the atomic level in materials science, and by utilizing quantum simulations for complex economic system modeling, risk management, the development of advanced investment strategies, etc. in finance.

As described above, in the quantum simulation acceleration apparatus and method according to the present disclosure, the configurations and schemes in the above-described embodiments are not limitedly applied, and some or all of the above embodiments can be selectively combined and configured such that various modifications are possible.

## Claims

1. A quantum simulation acceleration apparatus, comprising:

   one or more processors; and
   a memory configured to store at least one program that is executed by the one or more processors,
   wherein the at least one program is configured to:

   configure a one-dimensional (1D) column vector [$\alpha$, $\beta$] from a quantum state of an input qubit,
   execute a quantum gate operation on the 1D column vector using at least one of a quantum gate having a diagonal component or a quantum gate having a non-diagonal component, or a combination thereof, and
   trace the quantum state of the qubit changing depending on the quantum gate operation.

2. The quantum simulation acceleration apparatus of claim 1, wherein the quantum state of the qubit is defined as three quantum states for each qubit depending on a qubit pattern.

3. The quantum simulation acceleration apparatus of claim 2, wherein the quantum state of the qubit is defined as three quantum states including:

   S_ZERO for a $\alpha|0>$ state,
   S_ONE for a $\beta|1>$ state, and
   S_SUPERPOSED for a $\alpha|0>+ \beta|1>$ state when the qubit is in a superposition.

4. The quantum simulation acceleration apparatus of claim 1, 2 or 3, wherein the at least one program is configured to execute a quantum gate operation that changes only a value of $\beta$ without changing a value of $\alpha$ in the 1D column vector [$\alpha$, $\beta$] using a quantum gate, in which a value of a component in a first column and a first row, among components of a matrix, is 1, among quantum gates having the diagonal component.

5. The quantum simulation acceleration apparatus of claim 4, wherein the at least one program is configured to execute the quantum gate operation only on a diagonal component using a quantum gate, in which the value of the component in the first column and the first row and a value of a component in a second column and a second row, among the components of the matrix, satisfy an Euler equation, among quantum gates having the diagonal component.

6. The quantum simulation acceleration apparatus of claim 3, 4 or 5, wherein the at least one program is configured to execute the quantum gate operation as a multiplication operation between the 1D column vector and a value of a component corresponding to a first column, among components of a matrix of the quantum gate having the non-diagonal component, when the quantum state of the qubit is S_ZERO.

7. The quantum simulation acceleration apparatus of one of claims 3 to 6, wherein the at least one program is configured to execute the quantum gate operation as a multiplication operation between the 1D column vector and a value of a component corresponding to a second column, among components of a matrix of the quantum gate having the non-diagonal component, when the quantum state of the qubit is S_ONE.

8. The quantum simulation acceleration apparatus of one of claims 3 to 7, wherein the at least one program is configured to execute a full matrix operation between the 1D column vector and a matrix of the quantum gate having the non-diagonal component and to update the quantum state of the qubit only in a case where both a value of the 1D column vector and a result of executing the full matrix operation are greater than 0 when the quantum state of the qubit is S_SUPERPOSED.

9. The quantum simulation acceleration apparatus of one of claims 1 to 8, wherein the at least one program is configured to update the quantum state of the qubit stored in the memory based on a quantum state changing in each quantum gate operation.

10. The quantum simulation acceleration apparatus of claim 9, wherein the at least one program is configured to, when the quantum gate operation is executed using the quantum gate having the diagonal component, directly update the quantum state of the qubit, changed with a result of the quantum gate operation, in the memory.

11. The quantum simulation acceleration apparatus of claim 10, wherein the at least one program is configured to, when the quantum gate operation is executed using the quantum gate having the non-diagonal component, temporarily store the quantum state of the qubit, changed with a result of the quantum gate operation, in a temporary storage, and bulk update temporarily stored quantum states in the memory after quantum gate operations on all qubits are terminated.

12. A quantum simulation acceleration method performed by a quantum simulation acceleration apparatus, comprising:

configuring a one-dimensional (1D) column vector $[\alpha, \beta]$ from a quantum state of an input qubit;
executing a quantum gate operation on the 1D column vector using at least one of a quantum gate having a diagonal component or a quantum gate having a non-diagonal component, or a combination thereof; and
tracing the quantum state of the qubit changing depending on the quantum gate operation.

13. The quantum simulation acceleration method of claim 12, wherein the quantum state of the qubit is defined as three quantum states for each qubit depending on a qubit pattern.

14. The quantum simulation acceleration method of claim 13, wherein the quantum state of the qubit is defined as three quantum states including:

S_ZERO for a $\alpha|0>$ state,
S_ONE for a $\beta|1>$ state, and
S_SUPERPOSED for a $\alpha|0>+ \beta|1>$ state when the qubit is in a superposition.

15. The quantum simulation acceleration method of claim 12, 13 or 14, wherein executing the quantum gate operation comprises:
executing a quantum gate operation that changes only a value of $\beta$ without changing a value of $\alpha$ in the 1D column vector $[\alpha, \beta]$ using a quantum gate, in which a value of a component in a first column and a first row, among components of a matrix, is 1, among quantum gates having the diagonal component.

FIG. 1

FIG. 2

FIG. 3

EP 4 550 220 A1

QUBIT
STATE TABLE    401

GATE
OPERATION    402

QUBIT
STATE TRANSITION    403

QUBIT 0

QUBIT 1

QUBIT 2

QUBIT 3

QUBIT 4

⋮

QUBIT N-2

QUBIT N-1

SET
QUBIT-I's
STATE

APPLY
QUANTUM GATE
FOR QUBIT-I

TRACKING
QUBIT-I's
STATE

S_ZERO
$\alpha|0\rangle$

S_ONE
$\beta|1\rangle$

S_SUPER
POSED
$\alpha|0\rangle+\beta|1\rangle$

**FIG. 4**

**FIG. 5**

START

S501 — SET VARIABLES FOR QUBIT isLower=FALSE isUpper=FALSE

S502 — LOOKUP STATE

S503 — END OF STATES?
- Y → S509A
- N → S504

S504 — MATRIX CALCULATION

S505 — UPDATE STATE ACCORDING TO CALCULATED AMPLITUDES

S506A — ADD OR UPDATE LOWER STATE → S507A — set isLower=TRUE

S506B — REMOVE LOWER STATE

S506C — ADD OR UPDATE UPPER STATE → S507B — set isUpper=TRUE

S506D — REMOVE UPPER STATE

S508 — GO TO LOOKUP LOOP

S509A — isLower=TRUE isUpper=TRUE
- Y → S510A — set S_SUPERPOSE
- N → S509B

S509B — isLower=TRUE
- Y → S510B — set S_ZERO
- N → S509C

S509C — isUpper=TRUE
- Y → S510C — set S_ONE

END

24

$$Z = \begin{bmatrix} 1 & 0 \\ 0 & -1 \end{bmatrix} \quad SDG = \begin{bmatrix} 1 & 0 \\ 0 & -i \end{bmatrix}$$

$$P(\theta) = \begin{bmatrix} 1 & 0 \\ 0 & e^{i\theta} \end{bmatrix} \quad TDG = \begin{bmatrix} 1 & 0 \\ 0 & -e^{i\pi/4} \end{bmatrix}$$

$$S = \begin{bmatrix} 1 & 0 \\ 0 & i \end{bmatrix} \quad U1(\lambda) = \begin{bmatrix} 1 & 0 \\ 0 & e^{i\lambda} \end{bmatrix} \sim 601$$

$$T = \begin{bmatrix} 1 & 0 \\ 0 & e^{i\pi/4} \end{bmatrix} \quad RZ(\theta) = \begin{bmatrix} -e^{i\theta/2} & 0 \\ 0 & e^{i\theta/2} \end{bmatrix} \sim 602$$

DIAGONAL GATE #1 $\begin{bmatrix} 1 & 0 \\ 0 & m \end{bmatrix} \begin{bmatrix} \alpha \\ \beta \end{bmatrix} = \begin{bmatrix} \alpha \\ m\beta \end{bmatrix} \sim 603$

DIAGONAL GATE #2 $\begin{bmatrix} m^1 & 0 \\ 0 & m^2 \end{bmatrix} \begin{bmatrix} \alpha \\ \beta \end{bmatrix} = \begin{bmatrix} m^1\alpha \\ m^2\beta \end{bmatrix} \sim 604$

**FIG. 6**

$$Z = \begin{bmatrix} 1 & 0 \\ 0 & -1 \end{bmatrix}$$

702

| | | |
|---|---|---|
| c0\|000⟩ | | c0 |
| c1\|001⟩ | ⇢ | c1×(-1) |
| c2\|010⟩ | | c2 |
| c3\|011⟩ | ⇢ | c3×(-1) |
| c4\|100⟩ | | c4 |
| c5\|101⟩ | ⇢ | c5×(-1) |
| c6\|110⟩ | | c6 |
| c7\|111⟩ | ⇢ | c7×(-1) |

701

$$Z = \begin{bmatrix} 1 & 0 \\ 0 & -1 \end{bmatrix}$$

| | | |
|---|---|---|
| c0\|000⟩ | $\begin{bmatrix} m00 & m01 \\ m10 & m11 \end{bmatrix}$ | c1×m00+c2×m01 |
| c1\|001⟩ | | c1×m10+c2×m11 |
| c2\|010⟩ | $\begin{bmatrix} m00 & m01 \\ m10 & m11 \end{bmatrix}$ | c3×m00+c4×m01 |
| c3\|011⟩ | | c5×m10+c4×m11 |
| c4\|100⟩ | $\begin{bmatrix} m00 & m01 \\ m10 & m11 \end{bmatrix}$ | c5×m00+c6×m01 |
| c5\|101⟩ | | c5×m10+c6×m11 |
| c6\|110⟩ | $\begin{bmatrix} m00 & m01 \\ m10 & m11 \end{bmatrix}$ | c7×m00+c8×m01 |
| c7\|111⟩ | | c7×m10+c8×m11 |

**FIG. 7**

901

```
Function    DiagonalGate
Input       Qubit: the index of target qubit
            Gtype: gate type
            M: 2 x 2 matrix of { m00, m01, m10, m11 }


01. def RS: realized-state with amplitude greater than zero
02. #pragma omp parallel for
03. for each container in quantum register
04.        for each RS in container
05.              if RS is in lower bit state (|0⟩)
06.                    update RS amplitude ← RS.amp ×
m00
07.              else
08.                    update RS amplitude ← RS.amp ×
m11
09.              end if
10.        end for
11. end for
```

**FIG. 8**

1001

| Function | **Non-DiagonalGate** |
|---|---|
| Input | Qubit: the index of target qubit |
| | Gtype: gate type |
| | M: 2 x 2 matrix of { m00, m01, m10, m11 } |

```
01. def RS: realized-state with amplitude greater than zero
02. def AmpL(U): calculated RS's amplitude value
03. def add(del)RSList: vector array for temporally storing RSs
06. #pragma omp parallel for
07. for each container in quantum register
08.      for each RS in container
09.              if QSType[qubit] == S_ZERO
10.                      perform matrix calculation
11                           AmpL(AmpU) ← m00 × ampL(m10 × ampL)
12.                      update states
13.                          update or add RS to delRSList based on newAmpL value
14.                          add new state to addRSList based on newAmpU value
15.              else if QSType[qubit] == S_ONE
16.                      perform matrix calculation
17.                          AmpL(AmpU) ← m01 × ampL(m11 × ampL)
18.                      update states
19.                          add new state to addRSList based on newAmpL value
20.                          update or add RS to delRSList based on newAmpU value
21.              else
22.                      if RS is in upper bit state (|1⟩) then continue
23.                      lookup a matrix pair RS to calculate
24.                      perform matrix calculation
25.                          newAmpL = m00 × ampL + m01 × ampU
26.                          newAmpU = m01 × ampL + m11 × ampU
27.                      update new amplitudes of lower RS and upper RS
28.                              if newAmpL(newAmpU) is zero
29.                              |   add old state to delRSList or just skip if not exist
30.                              else if newAmpL(newAmpU) is greater than zero
31.                              |   update old states or add new state to addRSList
32.                              endif
33.              end if
34.      end for
35. end for
36. for each RS in delRSList(addRSList)
37.      parallel delete or add RS in Quantum Register
38. end for
```

**FIG. 9**

1100

1130

MEMORY

1131   1132

ROM   RAM

PROCESSOR

1110

USER INTERFACE
INPUT DEVICE

1140

USER INTERFACE
OUTPUT DEVICE

1150

1120

STORAGE   1160

NETWORK
INTERFACE   1170

NETWORK   1180

**FIG. 10**

Europäisches
Patentamt
European
Patent Office
Office européen
des brevets

# EUROPEAN SEARCH REPORT

**Application Number**

EP 24 20 9135

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | YIQING ZHOU ET AL: "What limits the simulation of quantum computers?", ARXIV.ORG, CORNELL UNIVERSITY LIBRARY, 201 OLIN LIBRARY CORNELL UNIVERSITY ITHACA, NY 14853, 18 February 2020 (2020-02-18), XP081627643, * page 1 - page 3; figure 1 * | 1-15 | INV. G06N10/20 G06N10/80 |
| A | US 11 556 686 B2 (GOOGLE LLC [US]) 17 January 2023 (2023-01-17) * figures 3A-3D * | 1-15 | |

**TECHNICAL FIELDS SEARCHED (IPC)**

G06N

The present search report has been drawn up for all claims

| Place of search | Date of completion of the search | Examiner |
|---|---|---|
| The Hague | 4 March 2025 | Falco, Gabriele |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

    .....................................................................................
& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 24 20 9135

This annex lists the patent family members relating to the patent documents cited in the above-mentioned European search report.
The members are as contained in the European Patent Office EDP file on
The European Patent Office is in no way liable for these particulars which are merely given for the purpose of information.

04-03-2025

| Patent document cited in search report | | Publication date | Patent family member(s) | | Publication date |
|---|---|---|---|---|---|
| US 11556686 | B2 | 17-01-2023 | CA | 3079533 A1 | 25-04-2019 |
| | | | CA | 3133427 A1 | 25-04-2019 |
| | | | CN | 111247538 A | 05-06-2020 |
| | | | EP | 3682383 A1 | 22-07-2020 |
| | | | EP | 4160491 A1 | 05-04-2023 |
| | | | US | 2021192114 A1 | 24-06-2021 |
| | | | US | 2023118636 A1 | 20-04-2023 |
| | | | WO | 2019078907 A1 | 25-04-2019 |

EPO FORM P0459

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- KR 1020230149049
- KR 1020240133159
- KR 1020230094098
- US 20230196157 A